# EUROPEAN PATENT APPLICATION

(11) **EP 3 761 168 A1**
(43) Date of publication of application: **06.01.2021**
(21) Application number: 19203904.8
(22) Date of filing: 17.10.2019
(51) Int. Cl.: G06F 9/4401

(54) **METHOD AND SYSTEM FOR REMOTE SELECTION OF BOOT DEVICE**

(30) Priority: 01.07.2019 US 201916458568
(71) Applicant: Quanta Computer Inc., Taoyuan City 333 (TW)
(72) Inventor: Su, Mei-Lin, 333 Taoyuan City (TW)
(74) Representative: Michalski Hüttermann & Partner Patentanwälte mbB

(57) **Abstract**

A system and method for reliable booting of a computer device is disclosed. A plurality of boot devices to boot the computer device is determined via a basic input output system of the computer device. Boot options data from the plurality of boot devices is compiled via the basic input output system. The boot options data is sent to a remote controller. The remote controller provides a prioritized boot option to the basic input output system. An attempt to boot the computer device is made via the prioritized boot option.

## Description

### TECHNICAL FIELD

The present disclosure relates generally to boot mechanisms for computing devices. More particularly, aspects of this disclosure relate to a boot mechanism that allows a user to remotely select a boot device.

### BACKGROUND

During the power on self-test (POST) routine for a computer system, such as a notebook or desktop computer, the basic input output system (BIOS) examines all peripheral devices connected to the computer system. The BIOS creates boot options corresponding to each of the bootable peripheral devices connected to the computer system. Such bootable devices are formally termed an Initial Program Load (IPL) device. Such devices may include a hard disk drive, a USB drive, a CD/DVD, a network connected device, or other devices. Generally, a computer user can view a bootable device list in a BIOS setup menu and configure the preferred boot priority for the devices in the list. After saving the boot priority settings and resetting the system, the BIOS will try to boot the computer device from the boot devices listed on the saved boot priority list.

The emergence of the cloud for computing applications has increased the demand for data centers that store data and run applications accessed by remotely connected computer device users. A typical data center has physical chassis structures with attendant power and communication connections. Each rack may hold multiple network devices such as computing servers and storage servers and may constitute a multi-node server system. The servers are all monitored remotely by different control servers such as a boot server operated by an administrator user.

A server computer differs from notebook or desktop computers in the boot up process. A server is usually remotely located in a lab or a data center from the administrator user. Thus, data center administrators must boot hundreds if not thousands of remote servers on the remotely located racks. Typically, an administrator user configures BIOS settings of servers remotely by a remote command protocol sent over a network. For example, the Intelligent Platform Management Interface (IPMI) specification provides a mechanism for a remote administrator to configure boot behavior of a networked computer device via a "Set System Boot Options" command over a network.

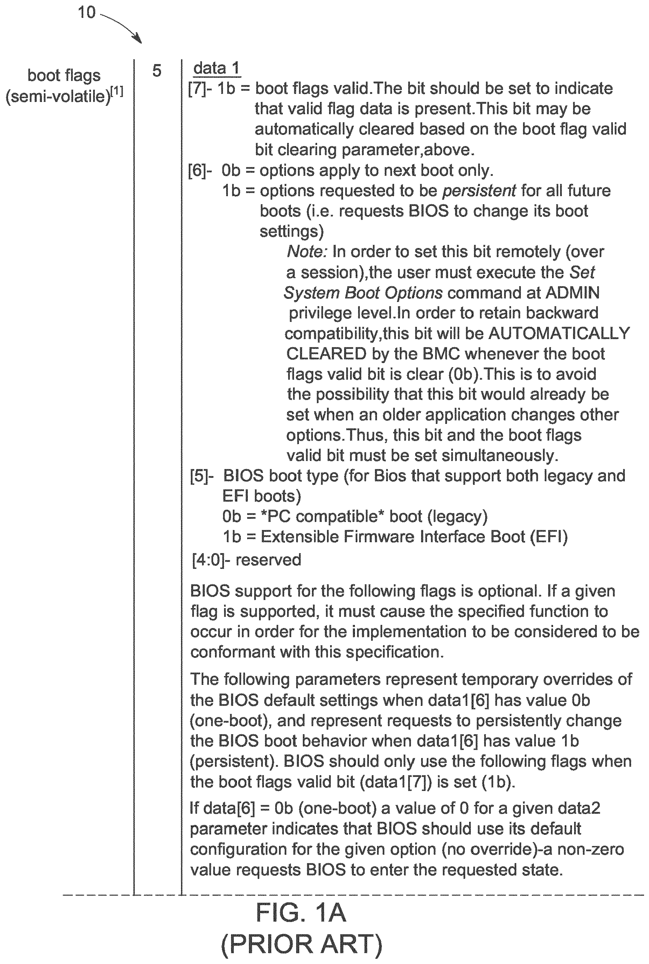

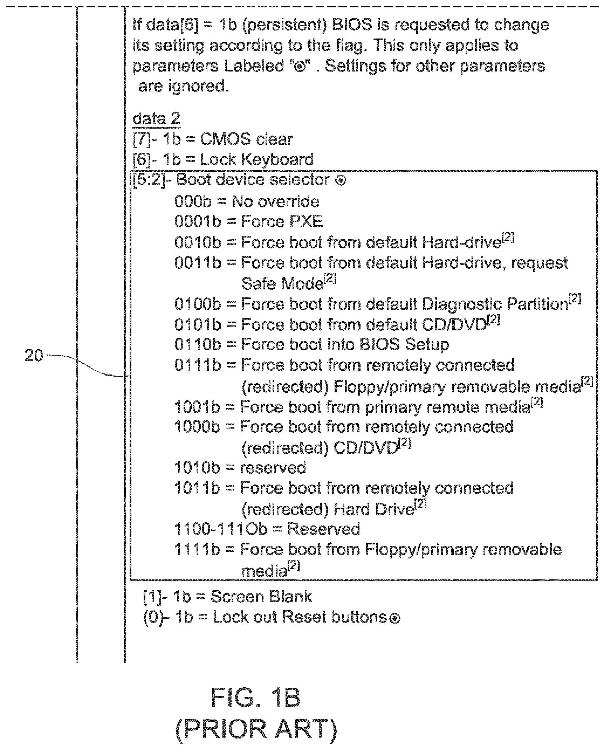

FIGs. 1A-1B shows a chart 10 of a known command format for the Intelligent Platform Management Interface (IPMI) specification. Specifically, the command formats in the chart 10 include boot flag parameters 20. The IPMI commands are used to set parameters that direct the system boot following a system power up or reset. For example, with the "boot flags" parameter, a user can select the boot device to be a flag such as "Force PXE" or "Force boot from Hard-drive" in the next boot process or for all future boots. Thus, the flag causes the BIOS to change its boot settings.

If the system configuration is simple, such as having one pre-boot execution environment (PXE) boot device or one hard disk drive, a user can select the boot device type in a straightforward manner. However, the system configuration may be more complex, such as a case where the system includes more than one network device, and each network device has several boot options to support different boot protocols. For example, one protocol may be an IPv4 PXE boot; another protocol may be an IPv6 PXE boot; a third protocol may be an IPv4 HTTP boot; and a fourth protocol may be an IPv6 HTTP boot. In such a case, it will be difficult for a user to select the boot device remotely, since there is a lack of information for current system boot options. Furthermore, once incorrect or unsupported boot settings are issued to the computer device, it will be time-consuming to retry or reconfigure the settings since an extra reboot is required to make settings take effect.

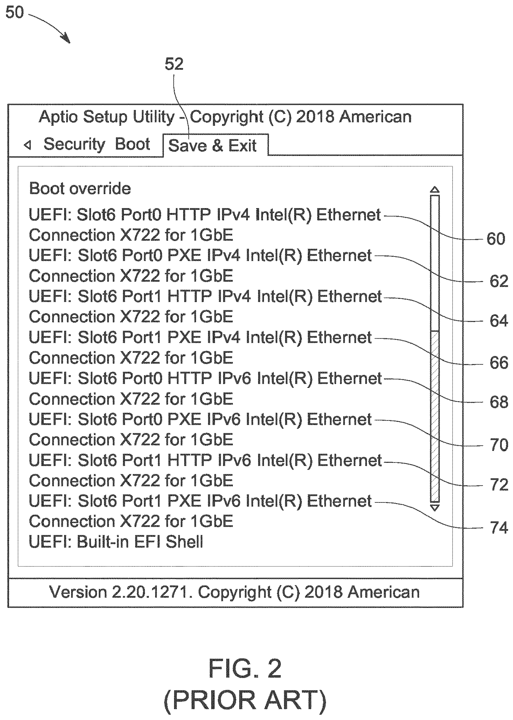

FIG. 2 is a screen image 50 of a conventional boot override listing 52 showing the boot options data of an example network computer device, X722, with 2 LAN ports. In the example shown in FIG. 2, the computer device includes a Unified Extensible Firmware Interface (UEFI), and supports two different boot protocols (HTTP, PXE) and two address formats (IPv4, IPv6). Thus the listing 52 reflects the eight boot options 60, 62, 64, 66, 68, 70, 72, and 74 for the 2 LAN ports that are generated. The listing of boot devices 52 does not necessarily reflect the actual boot devices available to a remotely located network device. Moreover, the numerous options make it difficult for an administrator to determine the current system boot settings for a remote network device, since there is no guarantee that the boot options are correct or supported by the remote network device.

Thus, there is a need for an efficient method to select a boot method for a remote server system. There is a further need for a boot selection system that allows a complex set of boot options to be remotely selected. There is also a need for a system that allows a remote controller to receive boot options from networked computing devices to accurately display the boot options for selecting a priority boot device.

### SUMMARY

One disclosed example is a system for reliable booting of a computer device. The system includes a remote controller and a basic input output system in communication with the controller. The computer device is capable of being booted via any of a plurality of boot devices. The basic input output system is operable to communicate boot options data to the controller. The boot options data includes each one of the plurality of boot devices. The controller is operable to provide a prioritized boot option selected from the boot options data to the basic input output system. The basic input output system attempts to boot the computer device via the prioritized boot option.

Another disclosed example is a method of reliable remote booting of a computer device. A plurality of boot devices to boot the computer device is determined via a basic input output system of the computer device. Boot option data from the plurality of boot devices is compiled via the basic input output system. The boot options data is sent to a remote controller. The remote controller provides a prioritized boot option to the basic input output system. An attempt to boot the computer device is made via the prioritized boot option.

The above summary is not intended to represent each embodiment or every aspect of the present disclosure. Rather, the foregoing summary merely provides an example of some of the novel aspects and features set forth herein. The above features and advantages, and other features and advantages of the present disclosure, will be readily apparent from the following detailed description of representative embodiments and modes for carrying out the present invention, when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIGs. 1A-1B are a prior art chart of IPMI commands including boot flags;
FIG. 2 is a screen image of a prior art listing of boot options for a networked remote computer device;
FIG. 3A is a block diagram of a system with a remote boot server incorporating the process for reliable remote booting of a computer device;
FIG. 3B is a block diagram of an example remote controller and the BIOS of a computer device in the example system shown in FIG. 3A;
FIG. 4 is a diagram of the interaction between a BIOS of a computer device to a remote controller in the system shown in FIG. 3A;
FIG. 5 is a flow diagram of the remote boot configuration in the system shown in FIG. 3A; and
FIGs. 6 and 7 illustrate exemplary systems in accordance with various examples of the present disclosure.

The present disclosure is susceptible to various modifications and alternative forms. Some representative embodiments have been shown by way of example in the drawings and will be described in detail herein. It should be understood, however, that the invention is not intended to be limited to the particular forms disclosed. Rather, the disclosure is to cover all modifications, equivalents, and alternatives falling within the spirit and scope of the invention as defined by the appended claims.

### DETAILED DESCRIPTION OF THE ILLUSTRATED EMBODIMENTS

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

The present disclosure provides a mechanism to pass bootable device information for a networked computer device, such as a server, to a remote controller (e.g. a BMC) to resolve problems with remote booting involving multiple boot options for the computer device. With the implementation explained below, a remote administrator user can read the boot options information and configure the preferred boot device easily for a networked computer device such as a server.

The process is based on the BIOS on a computer device sending detailed boot device information in the form of boot options data to a remote controller. Such a controller has its own processor and memory resources, and is powered independently from the BIOS and its associated motherboard. Such boot options data includes the type of bootable device, the instance number, human readable description, location of bootable devices, or the amount of boot devices for a remote controller such as a BMC to refer to. The information is sent to the remote controller after the process of creating boot options for all bootable devices is completed for the computer device. Once the remote controller receives the boot options data, it can display the boot options data for an administrator user. The administrator user may then understand current boot options for the computer device, and further configure the boot device settings for the computer device. Thus, a remotely selected prioritized boot option by the administrator user sent to the computer device will reliably boot the computer device.

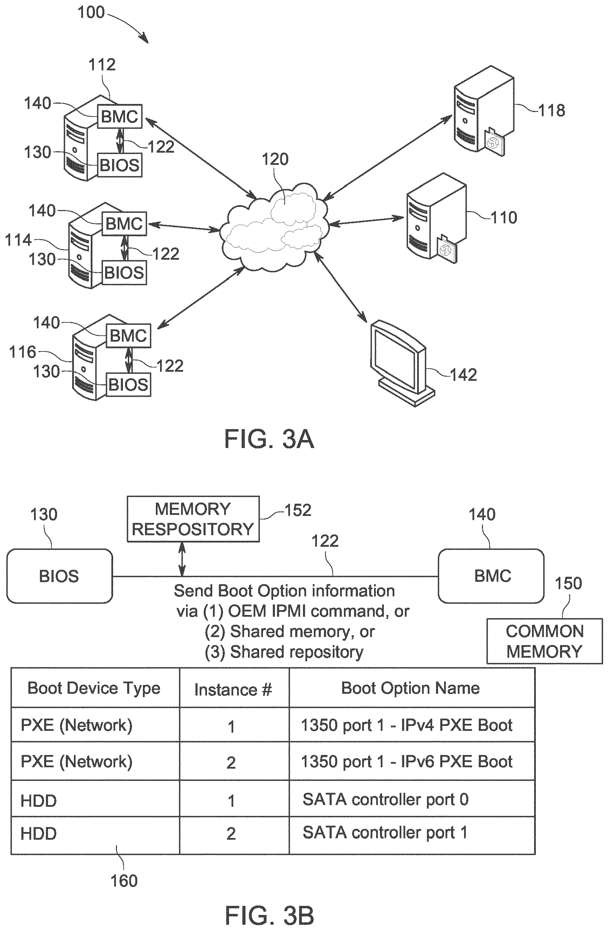

FIG. 3A is a block diagram of a system 100 that allows internal booting of different computer devices or remote booting from a network device. Network devices that may boot a computer device may include a boot server, such as a PXE server 110. In this example, the system includes different networked computer devices such as application servers 112, 114, and 116. The PXE server 110 is in communication with the application servers 112, 114, and 116, via a network 120. The PXE server 110 is capable of standard network protocol communication to each of the servers 112, 114, and 116.

Each of the servers 112, 114, and 116, include basic input output systems (BIOS) 130 that can initiate the booting of respective operating systems to operate each of the servers 112, 114, and 116. As explained above, each of the servers 112, 114, and 116 may be booted via the PXE server 110, or locally via a peripheral device. Each of the servers includes a remote controller such as a baseboard management controller (BMC) 140 to assist in operation of the respective server. The baseboard management controller 140 is in communication with the respective BIOS 130 on the application servers 112, 114, and 116 through a standard protocol such as IPMI or Redfish. The IPMI standard protocol uses message-based interfaces for the different interfaces to the platform management subsystem such as IPMB, serial/modem, LAN, ICMB, PCI Management Bus, and the system software-side "System Interface" to the BMC 140. The IPMI protocol defines three standardized system interfaces that system software uses for transferring IPMI messages to the BMC 140. In order to support a variety of microcontrollers, IPMI offers a choice of system interfaces. The present IPMI system interfaces can be I/O or memory mapped. Any system bus that allows the main processor(s) to access the specified I/O or memory locations, and meet the timing specifications, can be used. Thus, an IPMI system interface could be hooked to the X-bus, PCI, LPC, or a proprietary bus off the baseboard controller chip set of the BMC 140. The IPMI system interfaces include Keyboard Controller Style (KCS), System Management Interface Chip (SMIC), Block Transfer (BT), and SMBus System Interface (SSIF). In addition to the System Interface and IPMB, IPMI messaging can be carried over other interfaces, such as LAN, serial/modem, ICMB, and PCI management bus. IPMI includes a communication infrastructure that supports transferring messages between these interfaces as well as to the BMC 140.

The baseboard management controller 140 may generate a user interface on a display device such as a display screen 142 for a user to view the system settings from the network. As will be explained below, the BMC 140 may provide a list of boot options for each of the servers such as server 112 on the display screen 142. The user interface allows the administrator user to select a prioritized boot option from available displayed boot options. Alternatively, a central management server 118 can be set up to manage all servers such as the servers 112, 114 and 116 in an intranet or a data center. A user can configure the boot settings via the management server 118 and then apply the boot settings to all systems or partial systems in the same group.

FIG. 3B shows a block diagram of the BMC 140 of the server 112 in FIG. 3A in communication with the BIOS 130. As explained above, the BIOS 130 and the baseboard management controller 140 are in communication via an IPMI protocol or a Redfish protocol. The BIOS 130 and the baseboard management controller 140 may also access a common shared memory 150. In this example, the common shared memory 150 could be a memory region in the system memory or in dedicated DRAM in the baseboard management controller 140. The BIOS 130 and the baseboard management controller 140 may also be coupled to a memory repository 152. As explained above, the BIOS 130 passes boot options data 160 to the BMC 140. The boot data 160 includes different options to boot up the application server 112. In this example, the boot options include PXE options for network boot via IPv4 and IPv6. The options also include hard disk boot via either SATA controller port 0 or SATA controller port 1 of the application server 112.

In this example, there are several methods to pass the boot options data to the BMC 140 from the BIOS 130. One method is via an OEM IPMI command. In this method, the BIOS 130 uses an OEM IPMI command with a pre-defined format to pass boot data 160 to the BMC 140 via various system interfaces such as Keyboard Controller Style (KCS), System Management Interface Chip (SMIC), Block Transfer (BT), SMBus System Interface (SSIF), or other industrial transfers such as Redfish.

A second method may be through a shared memory such as the shared memory 150. Shared memory is one region within system memory space on the server 112 or within the DRAM of the BMC 140. When the shared memory is in one region within system memory space, during the power on self-test routine, the BIOS 130 will assign a memory resource to a PCIE device, such as a video device, from the BMC 140. Thus, the BMC 140 can access the data written into this region by the BIOS 130. In this example, the shared memory 150 is part of the internal memory of the server 112. In this method, the BIOS 130 configures and maps a specific memory region of the server to a PCIE device from BMC 140. The BIOS 130 then writes the boot options data 160 into this memory for redirect of the boot options data 160 to the memory of the BMC 140. When the shared memory is within the DRAM of the BMC 140, the BMC 140 will initialize its DRAM and allocate one memory region for the BIOS to write data into during the power on self-test routine. The BMC 140 can provide a predefined method, such as an OEM IPMI command or a USB interface, for the BIOS 130 to pass data into this dedicated memory in the BMC 140.

A third method is use of a shared repository such as the memory repository 152. In this example, the memory repository 152 is external storage space that may be accessed by both the BMC 140 and the BIOS 130 such as an EEPROM on the server motherboard or a database on the network accessible by the server 112. Thus, the BIOS 130 may write the boot options data 160 using an onboard or external repository such as the memory repository 152. The memory repository 152 may be accessed by both the BIOS 130 and BMC 140 to restore the boot options data 160.

The process performed from the BIOS 130 for a boot up of the server 112 includes five steps. First, the BIOS 130 examines how many bootable devices are connected to the server 112. The BIOS 130 examines all peripheral devices connected to the server and creates boot options for all bootable devices. This process is performed after system power on or reset. Bootable devices may include a hard disk drive, a USB drive, a CD/DVD, or network devices. Second, the BIOS 130 prioritizes the boot options based on the boot order settings. A user can configure the boot order priority of boot options in a BIOS setup menu and save the raw data of this order in a memory, such as a non-volatile random access memory (NVRAM), on the application server 112. For example, a boot order may include a first boot type through a USB port, a second boot type through a network device, and a third boot type through a CD/DVD drive. The BIOS 130 will prioritize all boot options based on the boot order settings stored in the NVRAM during the POST routine.

Third, the BIOS 130 adjusts the boot order if any boot order change is requested from BMC 140, such as sending one option that will be a prioritized boot option. The BIOS 130 checks if any boot order change is requested from the BMC 140 via sending a "Set System Boot Options" command over an IPMI or Redfish bus 122. Fourth, the BIOS 130 will send the final boot options data 160 to the BMC 140. Finally, the BIOS will try to boot the operating system on the application server 112. The BIOS 130 will try the boot options based on the boot order priority in the boot order list. If a failure to boot occurs from the first option, the BIOS 130 will attempt to boot from the second option, and so on, until all boot options are attempted.

As will be explained below, since the BMC 140 has a list of boot options from the BIOS 130, any reordering of the boot options by a remote administrator user is based on the current list of boot options available to the BIOS 130. Thus, the BIOS 130 will successfully boot the server 112 because the boot device is one of those available to the BIOS 130, even if the administrator user changes the boot order.

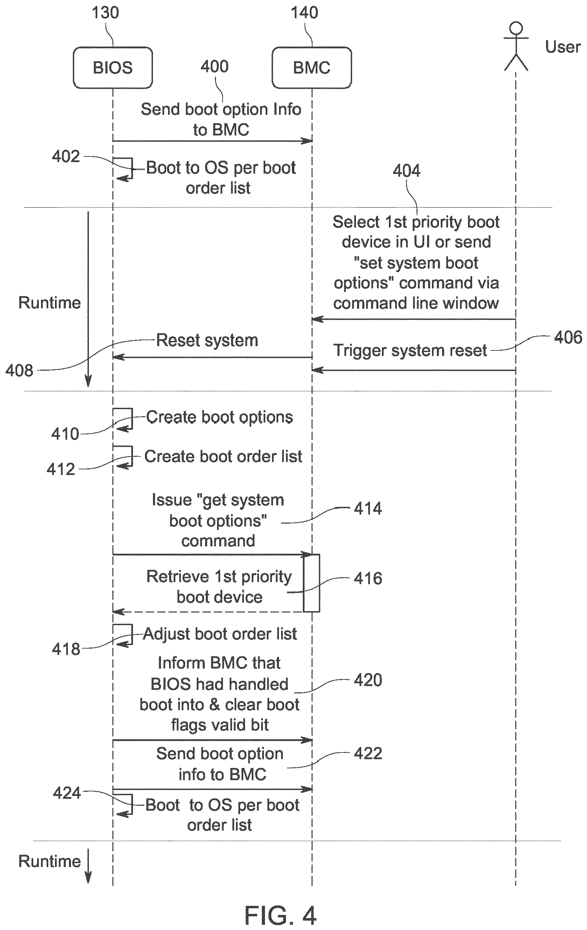

FIG. 4 is a diagram showing the interaction between BIOS 130 and BMC 140 in FIG. 3B that allows successful boots when an administrator user selects the boot device remotely. The BIOS 130 sends the boot option data to the BMC 140 via the IPMI or Redfish bus 122 in FIG. 3B during the first power on process (400). The BIOS 130 then boots up the server 112 based on one of the boot devices on the boot order list (402). The server 112 then begins to run. The administrator user may select a first priority boot device in a user interface or send a set system boot options command via a command line window displayed on the display 142 shown in FIG. 3A (404). The administrator user then triggers a system reset (406). The system reset command is sent by the BMC 140 to the BIOS 130, which then resets the system (408).

The BIOS 130 then creates a list of boot options by examining all peripheral devices connected to the server 112 (410). The BIOS 130 prioritizes all the boot options and creates a boot order list (412). The BIOS 130 then issues a "get system boot options" command to the BMC 140 over the IPMI or Redfish bus 122 (414). The BIOS 130 then retrieves the first priority boot device from the data sent by the BMC 140 (416). The BIOS 130 then adjusts the boot order list to incorporate the first priority boot device (418). The BIOS 130 then informs the BMC 140 that the BIOS 130 has handled the boot information (420). The BIOS 130 also clears the boot flags valid bit. The BIOS 130 then sends the adjusted boot option information to the BMC 140 (422). The BIOS 130 then boots the server 112 based on the new boot order list (424). The server 112 then enters runtime based on booting the operating system from the boot device on the boot order list.

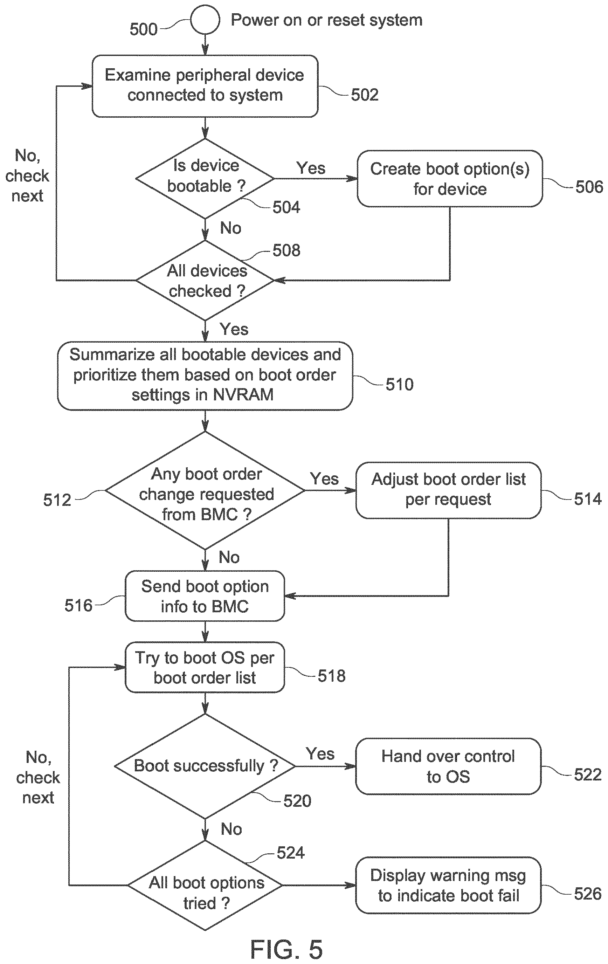

FIG. 5 is a flow diagram of the routine to select boot options based on remote selection. The flow diagram in FIG. 5 is representative of example machine readable instructions for the process of booting up a server such as the server 112 in FIG. 3A. In this example, the machine readable instructions comprise an algorithm for execution by: (a) a processor; (b) a controller; and/or (c) one or more other suitable processing device(s). The algorithm may be embodied in software stored on tangible media such as flash memory, CD-ROM, floppy disk, hard drive, digital video (versatile) disk (DVD), or other memory devices. However, persons of ordinary skill in the art will readily appreciate that the entire algorithm and/or parts thereof can alternatively be executed by a device other than a processor and/or embodied in firmware or dedicated hardware in a well-known manner (e.g., it may be implemented by an application specific integrated circuit [ASIC], a programmable logic device [PLD], a field programmable logic device [FPLD], a field programmable gate array [FPGA], discrete logic, etc.). For example, any or all of the components of the interfaces can be implemented by software, hardware, and/or firmware. Also, some or all of the machine readable instructions represented by the flowcharts may be implemented manually. Further, although the example algorithm is described with reference to the flowchart illustrated in FIG. 5, persons of ordinary skill in the art will readily appreciate that many other methods of implementing the example machine readable instructions may alternatively be used. For example, the order of execution of the blocks may be changed, and/or some of the blocks described may be changed, eliminated, or combined.

The power is turned on, or the server is reset (500). The BIOS 130 then examines a peripheral device connected to the server 112 (502). The BIOS determines whether the peripheral device is a boot device (504). If the device is a boot device, the BIOS 130 creates a boot option for the device (506). After creating a boot option, or if the examined device is not a boot device, the BIOS 130 determines whether all peripheral devices have been checked (508). If there are remaining devices, the routine loops to examine the next peripheral device (502). If all peripheral devices have been examined, the routine summarizes all the found bootable devices and prioritizes them based on the boot order settings in the NVRAM (510).

The BIOS 130 then determines whether any boot order change has been requested by a remote controller, such as the BMC 140 (512). If a boot order change has been requested, the BIOS 130 adjusts the boot order list as per the request for boot order change (514). If there is no boot order change request or after adjusting the boot order list, the BIOS 130 sends the boot option information to the BMC 140 (516). The routine then attempts to boot the server according to the devices on the boot order list (518). The BIOS 130 then determines whether the boot attempt was successful (520). If the boot attempt was successful, the BIOS 130 hands control over to the operating system of the server 112 (522). If the boot attempt is not successful, the routine determines whether all the boot options on the boot order list have been tried (524). If there are remaining untried options, the routine loops back and attempts to boot the operating system based on the next boot option on the boot order list (518). If all the boot options have been tried, the BIOS 130 displays a warning message to indicate boot failure.

The above described routine allowing the BIOS 130 to hand control over the operating system of the server is a feature based on a selected boot option from an accurate list of boot options available to a remote administrator. An administrator can determine the preferred first priority bootable device via the boot options information shown in a user interface screen generated by the BMC 140 on the display 142 in FIG. 3A from the boot options sent by the BIOS 130. The preferred first priority bootable device may thus be sent to the BIOS 130 and thus the BIOS 130 can boot to the operating system successfully on the first try. This ability to remotely select the boot device decreases the time required to successfully boot a system remotely.

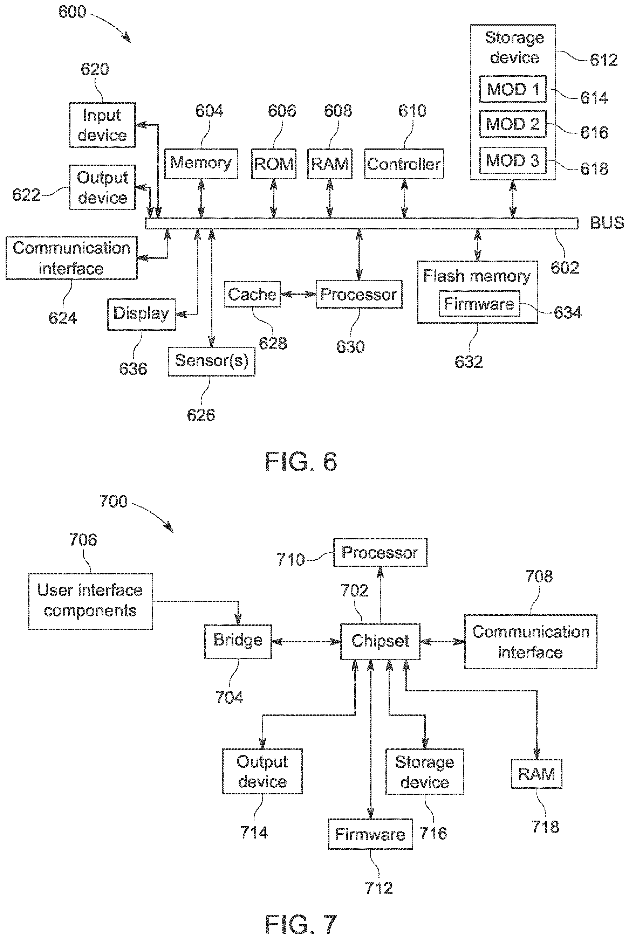

FIG. 6 illustrates an example computing system 600, in which the components of the computing system are in electrical communication with each other using a bus 602. The system 600 includes a processing unit (CPU or processor) 630; and a system bus 602 that couples various system components, including the system memory 604 (e.g., read only memory (ROM) 606 and random access memory (RAM) 608), to the processor 630. The system 600 can include a cache of high-speed memory connected directly with, in close proximity to, or integrated as part of the processor 630. The system 600 can copy data from the memory 604 and/or the storage device 612 to the cache 628 for quick access by the processor 630. In this way, the cache can provide a performance boost for processor 630 while waiting for data. These and other modules can control or be configured to control the processor 630 to perform various actions. Other system memory 604 may be available for use as well. The memory 604 can include multiple different types of memory with different performance characteristics. The processor 630 can include any general purpose processor and a hardware module or software module, such as module 1 614, module 2 616, and module 3 618 embedded in storage device 612. The hardware module or software module is configured to control the processor 630, as well as a special-purpose processor where software instructions are incorporated into the actual processor design. The processor 630 may essentially be a completely self-contained computing system that contains multiple cores or processors, a bus, memory controller, cache, etc. A multicore processor may be symmetric or asymmetric.

To enable user interaction with the computing device 600, an input device 620 is provided as an input mechanism. The input device 620 can comprise a microphone for speech, a touch-sensitive screen for gesture or graphical input, keyboard, mouse, motion input, and so forth. In some instances, multimodal systems can enable a user to provide multiple types of input to communicate with the system 600. In this example, an output device 622 is also provided. The communications interface 624 can govern and manage the user input and system output.

Storage device 612 can be a non-volatile memory to store data that is accessible by a computer. The storage device 612 can be magnetic cassettes, flash memory cards, solid state memory devices, digital versatile disks, cartridges, random access memories (RAMs) 608, read only memory (ROM) 606, and hybrids thereof.

The controller 610 can be a specialized microcontroller or processor on the system 600, such as a BMC (baseboard management controller). In some cases, the controller 610 can be part of an Intelligent Platform Management Interface (IPMI). Moreover, in some cases, the controller 610 can be embedded on a motherboard or main circuit board of the system 600. The controller 610 can manage the interface between system management software and platform hardware. The controller 610 can also communicate with various system devices and components (internal and/or external), such as controllers or peripheral components, as further described below.

The controller 610 can generate specific responses to notifications, alerts, and/or events, and communicate with remote devices or components (e.g., electronic mail message, network message, etc.) to generate an instruction or command for automatic hardware recovery procedures, etc. An administrator can also remotely communicate with the controller 610 to initiate or conduct specific hardware recovery procedures or operations, as further described below.

The controller 610 can also include a system event log controller and/or storage for managing and maintaining events, alerts, and notifications received by the controller 610. For example, the controller 610 or a system event log controller can receive alerts or notifications from one or more devices and components, and maintain the alerts or notifications in a system event log storage component.

Flash memory 632 can be an electronic non-volatile computer storage medium or chip that can be used by the system 600 for storage and/or data transfer. The flash memory 632 can be electrically erased and/or reprogrammed. Flash memory 632 can include EPROM (erasable programmable read-only memory), EEPROM (electrically erasable programmable read-only memory), ROM, NVRAM, or CMOS (complementary metal-oxide semiconductor), for example. The flash memory 632 can store the firmware 634 executed by the system 600 when the system 600 is first powered on, along with a set of configurations specified for the firmware 634. The flash memory 632 can also store configurations used by the firmware 634.

The firmware 634 can include a Basic Input/Output System or equivalents, such as an EFI (Extensible Firmware Interface) or UEFI (Unified Extensible Firmware Interface). The firmware 634 can be loaded and executed as a sequence program each time the system 600 is started. The firmware 634 can recognize, initialize, and test hardware present in the system 600 based on the set of configurations. The firmware 634 can perform a self-test, such as a POST (Power-On-Self-Test), on the system 600. This self-test can test the functionality of various hardware components such as hard disk drives, optical reading devices, cooling devices, memory modules, expansion cards, and the like. The firmware 634 can address and allocate an area in the memory 604, ROM 606, RAM 608, and/or storage device 612, to store an operating system (OS). The firmware 634 can load a boot loader and/or OS, and give control of the system 600 to the OS.

The firmware 634 of the system 600 can include a firmware configuration that defines how the firmware 634 controls various hardware components in the system 600. The firmware configuration can determine the order in which the various hardware components in the system 600 are started. The firmware 634 can provide an interface, such as an UEFI, that allows a variety of different parameters to be set, which can be different from parameters in a firmware default configuration. For example, a user (e.g., an administrator) can use the firmware 634 to specify clock and bus speeds; define what peripherals are attached to the system 600; set monitoring of health (e.g., fan speeds and CPU temperature limits); and/or provide a variety of other parameters that affect overall performance and power usage of the system 600. While firmware 634 is illustrated as being stored in the flash memory 632, one of ordinary skill in the art will readily recognize that the firmware 634 can be stored in other memory components, such as memory 604 or ROM 606.

System 600 can include one or more sensors 626. The one or more sensors 626 can include, for example, one or more temperature sensors, thermal sensors, oxygen sensors, chemical sensors, noise sensors, heat sensors, current sensors, voltage detectors, air flow sensors, flow sensors, infrared thermometers, heat flux sensors, thermometers, pyrometers, etc. The one or more sensors 626 can communicate with the processor, cache 628, flash memory 632, communications interface 624, memory 604, ROM 606, RAM 608, controller 610, and storage device 612, via the bus 602, for example. The one or more sensors 626 can also communicate with other components in the system via one or more different means, such as inter-integrated circuit (I2C), general purpose output (GPO), and the like. Different types of sensors (e.g., sensors 626) on the system 600 can also report to the controller 610 on parameters, such as cooling fan speeds, power status, operating system (OS) status, hardware status, and so forth. A display 636 may be used by the system 600 to provide graphics related to the applications that are executed by the controller 610.

FIG. 7 illustrates an example computer system 700 having a chipset architecture that can be used in executing the described method(s) or operations, and generating and displaying a graphical user interface (GUI). Computer system 700 can include computer hardware, software, and firmware that can be used to implement the disclosed technology. System 700 can include a processor 710, representative of a variety of physically and/or logically distinct resources capable of executing software, firmware, and hardware configured to perform identified computations. Processor 710 can communicate with a chipset 702 that can control input to and output from processor 710. In this example, chipset 702 outputs information to output device 714, such as a display, and can read and write information to storage device 716. The storage device 716 can include magnetic media, and solid state media, for example. Chipset 702 can also read data from and write data to RAM 718. A bridge 704 for interfacing with a variety of user interface components 706, can be provided for interfacing with chipset 702. User interface components 706 can include a keyboard, a microphone, touch detection and processing circuitry, and a pointing device, such as a mouse.

Chipset 702 can also interface with one or more communication interfaces 708 that can have different physical interfaces. Such communication interfaces can include interfaces for wired and wireless local area networks, for broadband wireless networks, and for personal area networks. Further, the machine can receive inputs from a user via user interface components 706, and execute appropriate functions, such as browsing functions by interpreting these inputs using processor 710.

Moreover, chipset 702 can also communicate with firmware 712, which can be executed by the computer system 700 when powering on. The firmware 712 can recognize, initialize, and test hardware present in the computer system 700 based on a set of firmware configurations. The firmware 712 can perform a self-test, such as a POST, on the system 700. The self-test can test the functionality of the various hardware components 702-718. The firmware 712 can address and allocate an area in the memory 718 to store an OS. The firmware 712 can load a boot loader and/or OS, and give control of the system 700 to the OS. In some cases, the firmware 712 can communicate with the hardware components 702-710 and 714-718. Here, the firmware 712 can communicate with the hardware components 702-710 and 714-718 through the chipset 702, and/or through one or more other components. In some cases, the firmware 712 can communicate directly with the hardware components 702-710 and 714-718.

It can be appreciated that example systems 600 (in FIG. 6) and 700 can have more than one processor (e.g., 630, 710), or be part of a group or cluster of computing devices networked together to provide greater processing capability.

As used in this application, the terms "component," "module," "system," or the like, generally refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller, as well as the controller, can be a component. One or more components may reside within a process and/or thread of execution, and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

The terminology used herein is for the purpose of describing particular embodiments only, and is not intended to be limiting of the invention. As used herein, the singular forms "a," "an," and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

While various embodiments of the present invention have been described above, it should be understood that they have been presented by way of example only, and not limitation. Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A system for reliable booting of a computer device, the system comprising:
a remote controller;
a basic input output system in communication with the remote controller, wherein the computer device is capable of being booted via any of a plurality of boot devices; and
wherein the basic input output system is operable to communicate boot options data to the remote controller, wherein the boot options data includes each one of the plurality of boot devices, and wherein the remote controller is operable to provide a prioritized boot option selected from the boot options data to the basic input output system, wherein the basic input output system attempts to boot the computer device via the prioritized boot option.

2. The system of claim 1, further comprising a display, wherein the remote controller is operable to display a list of boot options based on the boot option data on a user interface generated on the display, the user interface allowing a user to select the prioritized boot option.

3. The system of claim 1 or 2, wherein the plurality of boot devices includes at least one of a hard disk drive, a USB drive, a CD/DVD, or a network device, and/or wherein the boot options data is communicated via an IPMI command or a Redfish command between the remote controller and the basic input output system.

4. The system of any of claims 1 to 3, further comprising a shared memory accessible by the controller and the basic input output system, and wherein the boot options data is communicated by the basic input output system writing the boot options data in the shared memory, and/or wherein the boot options data is communicated by the basic input output system writing the boot options data in the shared memory repository.

5. The system of any of claims 1 to 4, wherein the controller is a baseboard management controller, and/or wherein the boot options data includes a type of boot device, an instance number, and a human readable description of the boot device.

6. The system of any of claims 1 to 5, wherein the basic input output system modifies a boot order list including an order of the plurality of boot devices by designating the prioritized boot option first in the order of the plurality of boot devices, and wherein if the prioritized boot option fails, the basic input output system attempts to boot the computer device via another boot device in the order of boot devices.

7. The system of claim 6, wherein the boot order list is stored in a memory of the computer device.

8. A method of reliable booting of a computer device, the method comprising:
determining a plurality of boot devices to boot the computer device via a basic input output system of the computer device;
compiling boot options data from the plurality of boot devices via the basic input output system;
sending the boot options data to a remote controller;
providing a prioritized boot option from the remote controller to the basic input output system; and
attempting to boot the computer device via the prioritized boot option.

9. The method of claim 8, further comprising displaying a list of boot options via the controller on a user interface that allows a user to select the prioritized boot option, and/or wherein the plurality of boot devices includes at least one of hard disk drive, a USB drive, a CD/DVD, or a network device.

10. The method of claim 8 or 9, wherein the boot options data is communicated via an IPMI command or a Redfish command between the basic input output system and the controller, and or wherein the boot options data is communicated by the basic input output device writing the boot options data in a shared memory.

11. The method of any of claims 8 to 10, wherein the boot options data is communicated by the basic input output device writing the boot options data in a shared memory repository.

12. The method of any of claims 8 to 11, wherein the controller is a baseboard management controller.

13. The method of any of claims 8 to 12, wherein the boot options data includes a type of boot device, an instance number, and a human readable description of the boot device.

14. The method of any of claims 8 to 13, further comprising modifying a boot order list including an order of the plurality of boot devices by designating the prioritized boot option first in the order of the plurality of boot devices; and
if the prioritized boot option fails, attempting to boot the computer device via another boot device in the order of boot devices.

15. The method of claim 14, further comprising storing the boot order list in a memory of the computer device.
